# EUROPEAN PATENT APPLICATION

(11) **EP 4 527 209 A1**
(43) Date of publication of application: **26.03.2025**
(21) Application number: 24201122.9
(22) Date of filing: 18.09.2024
(51) Int. Cl.: A23L 7/157, A23L 17/00, A23P 20/10, A23P 20/12

(54) **METHOD OF MAKING A FISH FINGER**

(30) Priority: 19.09.2023 GB 202314295
(71) Applicant: Nomad Foods Europe Limited, Feltham, Middlesex TW14 8HA (GB)
(72) Inventor: CALVOLI, Fabio, Middlesex, TW14 8HA (GB); BAAMONDE, Angybel, Middlesex, TW14 8HA (GB)
(74) Representative: Haseltine Lake Kempner LLP

(57) **Abstract**

Described is a method of making a fish finger, comprising
a) providing a fish finger core
b) providing a batter mixture comprising an acidulant, said batter mixture having a pH in the range of from about 2.5 to about 4.5,
c) disposing the batter mixture around the core to form a batter layer,
d) coating the batter layer with breadcrumbs, and
e) spray coating the breadcrumbs with an oil at a temperature of between 50 and 90 °C, wherein the oil has a melting point of less than 0 °C.

## Description

### Background

Fish fingers are a popular and convenient food staple that have been sold to consumers for many years. These products typically comprise a fish or fish analogue core, with a coating which is battered and breaded. Traditionally, these products are pre-fried in oil before they are frozen. The consumer usually re-heats the product at home, for example, by oven-baking or air-frying.

Conventional methods of pre-frying fish fingers leads to an uptake of a large amount of oil on the surface of the product, often rendering the product greasy. This is also perceived as unhealthy by certain consumers. Pre-frying in oil can increase the rancidity of the product, due to high levels of peroxide indicative of lipid oxidation. Frying products in oil also consumes a large amount of energy, since energy is required both to power the production frier and maintain the oil temperature.

There is therefore an increasing demand for new methods of making fish finger products that are simpler and more energy-efficient, while simultaneously resulting in a product that is typically healthier, fresher and/or less greasy. However, any new product also needs to have good taste, good food safety and good palatability to be acceptable to consumers who are used to traditionally prepared fish finger products. Any new product also needs to be suitable for mass production where the fish finger cores can be battered and breaded using standard industrial coating lines.

### Summary of Invention

In a first aspect, the present invention provides a method of making a fish finger, comprising a) providing a fish finger core, b) providing a batter mixture comprising an acidulant, said batter mixture having a pH in the range of from about 2.5 to about 4.5, c) disposing the batter mixture around the core to form a batter layer, d) coating the batter layer with breadcrumbs, and e) spray coating the breadcrumbs with an oil at a temperature of between 50 and 90 °C, wherein the oil has a melting point of less than 0 °C. The resultant fish finger is suitable for freezing. In some embodiments, the method further comprises a step f) which comprises freezing the fish finger (i.e., to form a frozen fish finger).

In a second aspect, the present invention provides a fish finger producible or produced by the method of the first aspect, said food product comprising a core; and an batter layer disposed around the core, said batter layer comprising an acidulant; and a breadcrumb layer disposed on the batter layer; and an oil layer (e.g., a spray-coated oil layer) disposed on the breadcrumbs, wherein the oil layer is present in an amount of less than 7 wt.% of the fish finger. In some embodiments, the oil is rapeseed oil or sunflower oil. In some embodiments, the fish finger is a frozen fish finger. In some embodiments, the acidulant is lemon juice concentrate.

In a third aspect, the present invention provides a fish finger comprising a fish finger core; and a batter layer disposed around the fish finger core, said batter layer comprising an acidulant; and a breadcrumb layer disposed on the batter layer; and an oil layer (e.g., a spray-coated oil layer) disposed on the breadcrumbs, wherein the oil layer is present in an amount of less than 7 wt.% of the fish finger. The third aspect may be formed by the method of the first aspect. In some embodiments, the oil is rapeseed oil or sunflower oil. In some embodiments, the fish finger is a frozen fish finger. In some embodiments, the acidulant is lemon juice concentrate.

In a fourth aspect, the present invention provides a fish finger comprising a fish finger core; and a batter layer disposed around the fish finger core, said batter layer comprising an acidulant; and a breadcrumb layer disposed on the batter layer; and an oil layer (e.g., a spray-coated oil layer) disposed on the breadcrumbs, wherein the oil layer has a peroxide value of less than 10 mEq of O₂/kg, or less than 7 mEq of O₂/kg, preferably less than 5 mEq of O₂/kg. The fourth aspect may be formed by the method of the first aspect. In some embodiments, the oil is rapeseed oil or sunflower oil. In some embodiments, the fish finger is a frozen fish finger.

The present invention has one or more of the following advantages over and above the prior art.

The method of the invention is simpler and more energy efficient compared with traditional methods which include pre-frying the product in oil. In the present invention, the battered and breaded core is spray-coated with oil and is suitable for freezing without any subsequent cooking or heat treatment step. Since no-heat treatment step is required prior to freezing, the method of the invention saves energy costs, simplifies the process and produces a food product with an oil layer that is fresher and less rancid compared with battered and breaded products that have been pre-fried. Different from other spray-coating methods disclosed in the art, the present method produces a coated food product that is suitable for freezing despite not having been further fried or heat-treated after applying the batter and/or breadcrumb layer(s). Since heat treatment is not required, the batter layer has been modified as compared with standard batter layers in the art such that it comprises an acidulant. The acidulant is added such that the pH of the batter mixture is between 2.5 and 4.5. This has the important effect of maintaining the microbiological safety of the batter mixture and batter layer, in spite of, or to make up for a lack of a heat treatment step before freezing.

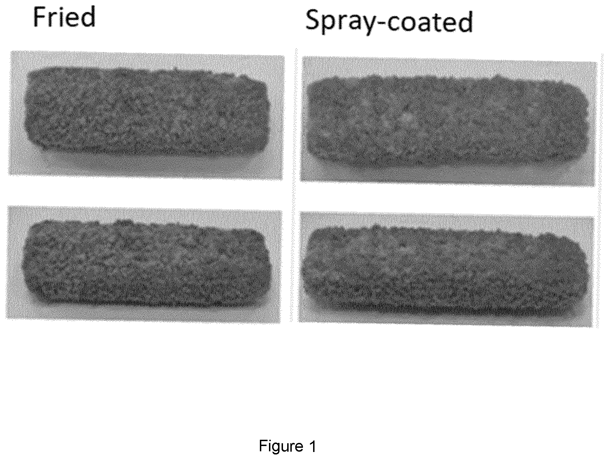

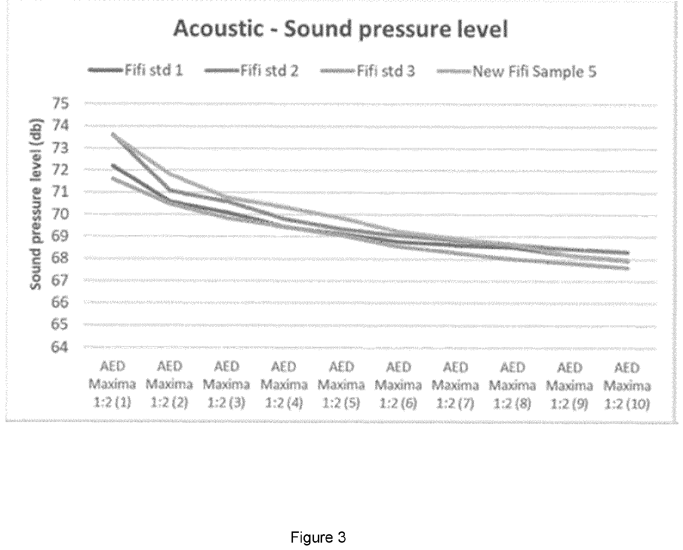

Importantly and unexpectedly, despite the product of the invention being formed using a very different method as compared to comparative products on the market, the appearance of the fish finger product is not compromised (see Figure 1). Example prototypes of the present invention also contain less oil in the final product as compared with comparative fish fingers prepared by pre-frying. This is in part due to a reduced amount of oil is taken up on the surface of the product due to spray-coating. The resultant product is therefore generally less greasy, healthier, fresher and/or may have improved nutritional properties compared with current battered and breaded fish fingers on the market which involve frying the product (i.e., before freezing). Consumer testing of example products in accordance with the invention were given an overall liking score that was the same as the current pre-fried product on the market from a statistical significance point of view (see Examples). In addition, acoustics results showed that example products of the invention had comparable acoustic properties to the current pre-fried products on the market (see Figure 3).

The present inventors found certain parameters of the spray-coating step to be key for ensuring an acceptable level of oil uptake on the surface of the product. The present inventors, in particular, found that spray-coating the breadcrumbs with oil at a temperature from 50 °C to 90 °C was key such that the oil had an appropriate fluidity and viscosity for an acceptable level of oil uptake. Heating the oil to a temperature of between 50 and 90 °C before and during spraying guaranteed an acceptable level of spray-coated oil, with a temperature of between 60 °C and 90°C, being most preferred. Lowering the temperature below 50 °C and/or increasing the temperature above 90°C meant that the fluidity and viscosity of the oil was affected which compromised the level of oil uptake on the surface of the product. More specifically, lowering the temperature below 50 °C meant that the oil was harder to spray, while raising the temperature above 90 °C resulted in a "thinner" oil-coating layer which affected the uniformity of the oil layer and the overall oil uptake (i.e., the amount of spray-coated oil in coated food product). These spray-coating temperatures were suitable with various oils having a melting point of 0 °C, including rapeseed oil and sunflower oil.

The fish finger of the invention, producible by the method of the invention, is suitable for freezing (i.e., without a heating or cooking step of the batter layer and breadcrumb layer prior to freezing). In some embodiments, the fish finger of the invention is a frozen fish finger, and the method of the invention further comprises a freezing step. Since the fish finger (i.e., spray-coated fish finger) is suitable for and not subject to a heating step before freezing, this can decrease the level of peroxides, and, hence, rancidity of the oil in the fish finger product. This can further increase the shelf life of the fish finger product. This results in a frozen fish finger product which may have improved storage during production, during transport and long-term storage of the product by the consumer.

In some embodiments, the method of the invention provides a batter mixture with a pH in a range from about 3 to 4.25, more preferably between 3 and 3.5. This pH range of the batter mixture is optimal in terms of sensory characteristics, as well as stability and viscosity of the batter mixture. In some embodiments, the acidulant used in the method of the invention comprises lemon juice concentrate, preferably from about 0.5 wt.% to about 6 wt.% lemon juice concentrate, and more preferably from 1 wt.% to 3 wt.% lemon juice concentrate. The use of lemon juice concentrate leads to a more preferable texture, taste, stability and viscosity of the batter mixture as compared to other acidulants. The indicated range of lemon juice concentrate is optimal in terms of these aforementioned characteristics.

In some embodiments, step e) of the method of the invention comprises spray-coating the oil at a temperature between 60 °C and 90 °C, preferably between 65 °C to 80 °C. The indicated temperature range results in the most preferable fluidity and viscosity for spray-coating of the oil.

In some embodiments, the fish finger of the invention comprises an oil layer (e.g., a spray-coated oil layer) present in an amount of 2 wt.% to 7 wt.% of the fish finger product, preferably in an amount of 2 wt.% to 5.5 wt.% of the fish finger, or from 4 wt.% to 5.5 wt.% of the fish finger product. This amount of oil layer is most preferable in maintaining the preferred sensory characteristics such as smell, taste and appearance, while in some instances, improves the nutritional profile of the fish finger as compared with a pre-fried fish finger since the overall amount of oil on the surface of the product is generally lower.

In some aspects or embodiments, the product of the invention comprises an oil layer (e.g., a spray-coated oil layer) with a peroxide value of less than 10 mEq of O₂/kg₂, and preferably less than 7 mEq of O₂/kg. Peroxide levels are a good indicator of the rancidity of the product, therefore, low peroxide levels are indicative of a food product with good shelf-life and most optimal improved freshness. Fried battered and breaded products typically have a O₂/kg₂ of in excess of 10 mEq of O₂/kg₂.

### Brief Description of Figures

Figure 1 shows left) a commercial fish finger product prepared by a traditional method involving a frying step, and right) a fish finger prepared by the method of the present invention, involving a spray-coating step. The two products are visually similar in appearance.

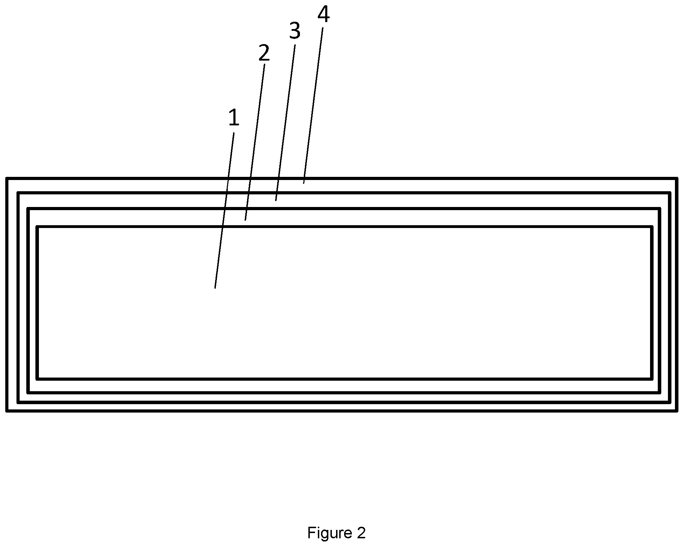

Figure 2 shows a schematic of an example fish finger product of the invention comprising a fish finger core (1), a batter layer (2), breadcrumbs (3) and an oil layer (4).
Figure 3 shows the acoustic results of a commercial fish finger products prepared by a traditional method involving a frying step (i.e., fifi std 1, 2, and 3) and a fish finger prepared by the method of the present invention involving a spray-coating step (new fifi sample 5). The products have comparable acoustic results.

### Detailed Description

The presently-disclosed subject matter is illustrated by specific but non-limiting embodiments or examples throughout this description. Each example is provided by way of explanation of the present disclosure and is not a limitation thereon.

All combinations of method or process steps as used herein can be performed in any order, unless otherwise specified or clearly implied to the contrary by the context in which the referenced combination is made.

While the following terms used herein are believed to be well understood by one of ordinary skill in the art, definitions are set forth to facilitate explanation of the presently-disclosed subject matter.

Unless defined otherwise, all technical and scientific terms used herein have the same meaning as commonly understood by one of ordinary skill in the art to which the presently-disclosed subject matter belongs. Although any methods, devices, and materials similar or equivalent to those described herein can be used in the practice or testing of the presently-disclosed subject matter, representative methods, and materials are described.

Following long-standing patent law convention, the terms "a", "an", and "the" refer to "one or more" when used in this application, including the claims.

All lists of items, such as, for example, lists of components or ingredients, are intended to and should be interpreted as Markush groups. Thus, all lists can be read and interpreted as items "selected from the group consisting of ... list of items ... "and combinations and mixtures thereof."

As used herein, the term "comprises" or "comprising" has an open meaning, which allows other, unspecified features to be present. This term embraces, but is not limited to, the semi-closed term "consisting essentially of" and the closed term "consisting of". Unless the context indicates otherwise, the term "comprises" may be replaced with either "consisting essentially of" or "consists of".

The features of any dependent claim may be readily combined with the features of any of the independent claims or other dependent claims. The features of any embodiment may also be readily combined with the features of any other embodiment, unless explicitly referred to or context dictates otherwise. It is intended that any range of component, for example, can be readily combined. It is also intended that any feature of one particular layer can be combined with a feature described for a different layer. Further, any embodiments of a method step (e.g., step a) can be combined with a embodiments of a different method step (e.g., step b, c, d, e or f etc.)

All percentages in the present disclosure are listed as percent by weight on the weight of the fish finger, unless context defines otherwise, or it is explicitly stated otherwise.

Fish finger described herein is a well-known term in the art. A fish finger refers to a battered and/or breaded fish product, often with a rectangular or substantially rectangular shape. They may otherwise be referred to or known as a "fish stick" in American English, or Fischstäbchen in German.

Fish finger product defined herein refers to a coated food product comprising a fish finger core, comprising at least a batter layer and a breadcrumb layer.

In the detailed description, "product" or "food product" may be used interchangeably with "fish finger" or "fish finger food product".

Sieve analysis referred to herein refers to a method of particle size characterisation using standard sieves. As an example, the sieve analysis may be performed using U.S standard sieves 5.6 mm, 4 mm, 2.8 mm, 1.7 mm, 1 mm, 0.71 mm and 0.25 mm, which may otherwise be known as the ASTM standard meshes No. 3 ½, 7, 12, 18, 25 and 60.

While certain suppliers may be referred to herein, these are intended only to be exemplary and it should be understood that components from other suppliers may be used.

### Method of the invention

### A) Providing a fish finger core

The method of the present invention comprises providing a fish finger core. In preferred embodiments, the fish finger core is a frozen core. In some embodiments, the fish finger core is fish, and more preferably a cooked (i.e., not raw) fish. In some embodiments, the fish finger core comprises reconstituted fish which has been cooked (i.e., is not raw). In some embodiments, the fish finger core preferably is made from frozen fish, i.e., frozen fish which has been pre-cooked. In other embodiments, providing the fish core comprises cooking the fish core (i.e., prior to step b). In some embodiments, the fish finger core comprises whitefish. In some embodiments, the whitefish core is selected from hake (Merluccius merluccius), haddock (Melanogrammus aeglefinus), cod (Gadus morhua), pollock (Pollachius), pangasius (Pangasius). In some embodiments, the fish finger core comprises a fish analogue and/or a plant-based material. This may be provided and made as described in EP22724781.4, the contents of which may be disclosed herein by reference.

In some embodiments, the fish finger core is rectangular or substantially rectangular in shape. In some embodiments, the core has a length of between 60 and 100 mm, or between 70 and 90 mm, for example, a length of about 80 mm. In some embodiments, the fish finger core has a length of at least 60 mm (e.g., from 60 to 100 mm), or at least 65 mm (e.g., from 65 to 100 mm), or at least 70 mm (e.g., from 70 to 100 mm), or at least 75 mm (e.g., from 75 to 100 mm). In some embodiments, the fish finger core has a length of less than 100 mm (e.g., from 60 to 100 mm), or less than 95 mm (e.g., from 60 to 95 mm), or less than 90 mm (e.g., from 60 to 90 mm), or less than 85 mm (e.g., from 60 to 85 mm), or less than 80 mm (e.g., from 60 to 80 mm). In some embodiments, the fish finger core has a width of between 15 and 25 mm, or 17.5 and 22.5 mm, for example between 20 and 21 mm. In some embodiments, the fish finger core has a width of at least 15 mm (e.g., from 15 to 25 mm), or at least 16 mm (e.g., from 16 to 25 mm), or at least 17 mm (e.g., from 17 to 25 mm), or at least 18 mm (e.g., from 18 to 25 mm), or at least 19 mm (e.g., from 19 to 25 mm), or at least 20 mm (e.g., from 20 to 25 mm). In some embodiments, the fish finger core has a width of less than 25 mm (e.g., from 15 to 25 mm), or less than 24 mm (e.g., from 15 to 24 mm), or less than 23 mm (e.g., from 15 to 23 mm), or less than 22 mm (e.g., from 15 to 22 mm), or less than 21 mm (e.g., from 15 to 21 mm). In some embodiments, the fish finger core has a height of between 6 and 12 mm, or 7 and 11 mm, for example between 8 and 10 mm. In some embodiments, the fish finger core has a height of at least 6 mm (e.g., from 6 to 12 mm), or at least 7 mm (e.g., from 7 to 12 mm), or at least 8 mm (e.g., from 8 to 12 mm). In some embodiments, the fish finger core has a height of less than 12 mm (e.g., from 6 to 12 mm), or less than 11 mm (e.g., from 6 to 11 mm), or less than 10 mm (e.g., from 6 to 10 mm), or less than 9 mm (e.g., from 6 to 9 mm). In some embodiments, the ratio of length:width dimensions of the fish finger core is from 2:1 to 6:1, or from 3:1 to 5:1.

In some embodiments the fish finger core is present in an amount of 50 wt.% to 70 wt.% by weight of the fish finger product, or from 55 wt.% to 65 wt.% by weight of the fish finger product. In some embodiments, the fish finger core is present in an amount that is at least 52.5 wt.% (e.g., from 52.5 wt.% to 70 wt.%), or at least 55 wt.% (e.g., from 55 wt.% to 70 wt.%), or at least 57.5 wt.% (e.g., from 57.5 wt.% to 70 wt.%). In some embodiments, the fish finger core is present in an amount that is less than 70 wt., or less than 67.5 wt.% (e.g., from 50 wt.% to 67.5 wt.%), or less than 65 wt.% (e.g., from 50 wt.% to 65 wt.%), or less than 62.5 wt.% (e.g., from 50 wt.% to 62.5 wt.%)) of the fish finger product.

In some embodiments, the fish finger core has a weight between 10g and 20g, more preferably between 12 g and 18 g, and more preferably a weight of about 15 g.

### B) Providing a batter mixture comprising an acidulant

In step b), the method of the invention comprises providing a batter mixture comprising an acidulant, said batter mixture having a pH in the range of from about 2.5 to about 4.5. The resultant batter layer comprises an acidulant.

In some embodiments, providing the batter mixture comprises adding components of the batter mixture together and mixing the components together.

Described herein, an acidulant is any compound or component that has an acidifying effect (e.g., a compound or component that is capable of becoming deprotonated). This has the effect of lowering the pH of the batter mixture. The acidulant may otherwise be referred to as an acidifier or an acidifying agent in the art.

In some embodiments, the batter mixture has a pH in the range of 2.75 to 4.25, or from 3 to 4.25, or from 3 to 4, or from about 3.25 to 4, or from 3 to 3.5. The pH may be as determined by pH meter. In some embodiments, the batter mixture has a pH that is less than 4.25, or a pH that is less than 4 (e.g., from 2.75 to 4, or from 3 to 4), or a pH that is less than 3.75 (e.g., from 2.75 to 3.75, or from 3 to 3.75), or a pH that is less than 3.5 (e.g., from 2.75 to 3.5, or from 3 to 3.5), or a pH that is less than or equal to 3.25 (e.g., from 2.75 to 3.25, or from 3 to 3.25). A batter mixture with a lower pH is found to reduce microbiological growth in the batter mixture and the resultant batter layer, thereby increasing food safety and rendering the need of a heat-treatment step prior to freezing and after spray-coating unnecessary. In some embodiments, the batter mixture has a pH that is greater than 2.5, or greater than 2.75, or a pH that is greater than 3. Lowering the pH was found to affect the stability and viscosity of the mixture, therefore a pH of at least 2.5 is selected. As demonstrated in the application examples, it was found that a batter mixture with a pH of around ~ 3-3.5 was optimum. A batter mixture with this pH had the optimum balance between improved microbiological safety and optimum stability with an acceptable viscosity of the batter mixture.

In preferred embodiments, the acidulant is derived from natural sources. In some embodiments, the acidulant is a fruit, plant or vegetable.

In preferred embodiments, the acidulant is a fruit juice, more preferably a citrus juice and even more preferably a lemon juice, e.g., a lemon juice concentrate.

In some embodiments, the batter mixture comprises 0.5-6 wt. % lemon juice concentrate by weight of the batter mixture, or from 0.75 wt.% to 4.5 wt.% lemon juice concentrate by weight of the batter mixture, more preferably between 1-3 wt.% lemon juice concentrate by weight of the batter mixture. In some embodiments, the batter mixture comprises more than 0.5 wt.% lemon juice concentrate (e.g., from 0.5 - 6 wt.%, or from 0.5 wt.% to 3 wt.%), or more than 1 wt.% lemon juice concentrate (e.g., from 1-6 wt.%, or from 1 wt.% to 3 wt.%), or more than 1.5 wt.% lemon juice concentrate (e.g., from 1.5 - 6 wt.%, or from 1.5 wt.% to 3 wt.%), or more than 1.75 wt.% lemon juice concentrate by weight of the batter mixture (e.g., from 1.75 - 6 wt.%, or from 1.75 wt.% to 3 wt.%). In some embodiments, the batter mixture comprises less than 6 wt.% lemon juice concentrate (e.g., from 0.5 - 6 wt.%, or from 1 wt.% to 3 wt.%), or less than 5 wt.% lemon juice concentrate (e.g., from 0.5 - 5 wt.%, or from 1 wt.% to 5 wt.%), or less than 4 wt.% lemon juice concentrate (e.g., from 0.5 - 4 wt.%, or from 1 wt.% to 4 wt.%), or less than 3 wt. % lemon juice concentrate (e.g., from 0.5 - 3 wt.%, or from 1 wt.% to 3 wt.%), or less than 2.5 wt.% lemon juice concentrate by weight of the batter mixture (e.g., from 0.5 - 2.5 wt.%, or from 1 wt.% to 2.5 wt.%). The lemon juice concentrate may be obtained from commercial sources, such as Agrumaria Corleone. Importantly, the addition of lemon juice concentrate to the batter mixture did not affect the stability or composition of the batter mixture. Additionally, the addition of lemon juice was found not to negatively alter the sensory properties of the batter layer, including the texture.

In some examples, the lemon juice concentrate is provided frozen. Lemon juice concentrate is from a natural origin and is therefore acceptable to the consumer and/or more environmentally friendly as compared to synthetic acidulants. In some embodiments, the fruit juice concentrate, more preferably the lemon juice concentrate, has a brix value between 30 and 50, for example, about 40 brix.

In alternative embodiments, the acidulant may be selected from vinegar (e.g., at a pH ~3), ascorbic acid, citric acid, tartaric acid, lactic acid or malic acid.

The batter mixture (i.e., for the batter layer) is in the form of a liquid comprising water. In some embodiments, the water is present in an amount of at least 30 wt.% by weight of the batter mixture, or at least 35 wt.% of at least 40 wt.%, or at least 45 wt.%, or present in an amount of at least 50 wt.% by weight of the batter mixture. In some embodiments, the batter mixture comprises from 40 wt.% to 60 wt.% water by weight of the batter mixture, or from 45 wt.% to 55 wt.% water by weight of the batter mixture.

In some embodiments, the batter mixture comprises flour, preferably wheat flour. In some embodiments, the batter mixture comprises from about 20 wt.% to about 40 wt.% flour by weight of the batter mixture, or more preferably between 25 wt.% and 35 wt.% flour by weight of the batter mixture, preferably wheat flour.

In some embodiments, the batter mixture comprises starch. In some embodiments, the starch is a potato starch. In some embodiments, the batter mixture comprises starch in an amount up to 7.5 wt.% by weight of the batter mixture. In some embodiments, the batter mixture comprises starch in amount between 3.5 wt.% and 7.5 wt.% by weight of the batter mixture, or from 4 wt.% to 7 wt.%, or from 4.5 wt.% to 6.5 wt.%, or from 5 wt.% to 6 wt.% by weight of the batter mixture.

In some embodiments, the batter mixture comprises salt. In some embodiments, the batter mixture comprises salt in an amount up to 4 wt.% of the batter mixture. In some embodiments, the batter mixture comprises salt in amount between 1.5 wt.% and 4 wt.% by weight of the batter mixture, or from 1.75 wt.% to 3.5 wt.%, or from 2 wt.% to 3 wt.% by weight of the batter mixture.

In some embodiments, the batter mixture comprises an oil, for example, a plant oil. In some embodiments, the oil is present in an amount from 0 wt.% to 15 wt.% by weight of the batter mixture, or from 0 wt.% to 12.5 wt.% by weight of the batter mixture, or from 5 wt.% to 12 wt.% by weight of the batter mixture. In some embodiments, the batter mixture comprises at least 5 wt. % oil (e.g., from 5 to 12.5 wt.% oil), or at least 6 wt. % oil (e.g., from 6 to 12.5 wt.%), or at least 7 wt.% oil (e.g., from 7 to 12.5 wt.%), or at least 8 wt.% oil (e.g., 8 to 12.5 wt.%), or at least 9 wt.% oil (e.g., from 9 to 12.5 wt.% oil) by weight of the batter mixture. In some embodiments, the batter mixture comprises less than 15 wt. % oil (e.g., from 5 to 15 wt.% oil), or less than 14 wt. % oil (e.g., from 5 to 14 wt.%), or less than 13 wt.% oil (e.g., from 7 to 15 wt.%), or less than 12 wt.% oil (e.g., 5 to 12 wt.%), or less than 11 wt.% oil (e.g., from 5 to 11 wt.% oil), or about 10 wt.% oil by weight of the batter mixture. Since oil uptake on the surface of the product is limited due to the spray-coating method, some additional oil may be added to the batter mixture in certain instances to obtain a good taste and/or texture. In alternative embodiments, the batter mixture is free of oil.

In some embodiments, the batter mixture comprises:
20 to 40% wheat flour
0.5 to 6 % lemon juice concentrate,
up to 12.5 % oil, preferably a plant oil, in some embodiments, between 6 wt.% and 12 wt.% oil,
up to 7.5 % starch,
up to 5% salt, and a balance of water
where wt.% are weight percentages of the batter mixture

In some embodiments, the batter mixture is free of egg. This makes the batter mixture suitable for those with an egg allergy.

### C) Disposing the batter mixture around the core to form a batter layer

In step c) of the method of the present invention, the method comprises disposing the batter mixture around the fish finger core to form a batter layer. This may be described as an external batter layer since it forms part of the fish finger coating. The batter layer described herein is the layer disposed between the core and the breadcrumbs.

In some embodiments, disposing the batter mixture around the core to form a batter layer can be achieved by dipping the core in the batter mixture. In some embodiments, disposing the batter mixture around the core is achieved by pouring the batter mixture over the core, e.g., while the core is conveyed on a line or belt.

In some embodiments, the batter layer is present in an amount that is 13. wt.% to 20 wt.% of the fish finger product, or from 14 wt.% to 18 wt.%, or the fish finger product. In some embodiments, the batter layer is present in an amount that is at least 13 wt.% of the fish finger product, or at least 14 wt.% (e.g., 14 wt.% to 20 wt.%), or at least 15 wt.% of the fish finger product (e.g., 15 wt.% to 20 wt.%). In some embodiments, the batter layer is present in an amount that is less than 20 wt.% of the fish finger product, or less than 19 wt.% of the fish finger product (e.g., 13 wt.% to 19 wt.%), or less than 18 wt.% of the fish finger product (e.g., 13 wt.% to 18 wt.%), or less than 17 wt.% of the fish finger product (e.g., 13 wt.% to 17 wt.%).

In some embodiments, the batter mixture comprises an oil (as defined above in step b). In such embodiments, the resultant batter layer comprises oil. In some embodiments, the oil in the batter layer may be present in an amount which is between 0 to 3 wt.% of the fish finger, or between 0 to 2.25 wt.% of the fish finger, or in an amount that is between 1 wt.% and 2.5 wt.%, or in an amount that is between 1.5 and 1.75 wt.% of the fish finger product. In some embodiments, the oil in the batter layer comprises less than 3 wt.% oil by weight of the fish finger product, or less than 2.5 wt.%, or less than 2 wt.%, or less than 1.75 wt.% oil by weight of the fish finger product.

In embodiments, the batter mixture comprises lemon juice or lemon juice concentrate (as defined in step b). In such embodiments, the resulting batter layer also comprises a lemon juice or lemon juice concentrate. In some embodiments, the lemon juice or lemon juice concentrate is present in an amount between 0.1 wt.% to 0.5 wt.% of the fish finger product, or from 0.25 wt.% to 0.45 wt.% of the fish finger product.

### D) Coating the batter layer with breadcrumbs

In step d) of the method of the present invention the method comprises coating the batter layer with breadcrumbs (e.g., to form one or more breadcrumb layer(s)).

The breadcrumbs may have any suitable particle size distribution. In some embodiments, the breadcrumb layer comprises a mixture of at least two different breadcrumbs having a different size distribution, wherein the first breadcrumb has a larger size distribution than the second breadcrumb, and optionally wherein the method comprises mixing the first and second breadcrumb distribution together, e.g., in a breading machine. In some embodiments, at least 50% of the first breadcrumb has a particle size of at least 1.7 mm as determined by sieve analysis, or at least 60 wt.% of the first breadcrumb has a particle size of at least 1.7 mm as determined by sieve analysis, or at least 70 wt.% of the first breadcrumb has a particle size of at least 1.7 mm as determined by sieve analysis, or at least 75 wt.% of the first breadcrumb has a particle size of at least 1.7 mm as determined by sieve analysis, or at least 80 wt.% of the first breadcrumb has a particle size of at least 1.7 mm as determined by sieve analysis, or at least 85 wt.% of the first breadcrumb has a particle size of at least 1.7 mm as determined by sieve analysis. In some embodiments, at least 25 wt.% of the first breadcrumb has a particle size of at least 2.8 mm as determined by sieve analysis, or at least 30 wt.%, or at least 35 wt.%, or at least 40 wt.% has a particle size of at least 2.8 mm as determined by sieve analysis. In some embodiments, at least 5 wt.% of the first breadcrumb has a particle size of at least 4 mm as determined by sieve analysis, or at least 6 wt.%, or at least 7 wt.%, or at least 8 wt.% of the first breadcrumb has a particle size of at least 4 mm as determined by sieve analysis.

In some embodiments, at least 25% of the second breadcrumb has a particle size of less than 1.7 mm as determined by sieve analysis, or at least 30 wt.% has a particle size of less than 1.7 mm as determined by sieve analysis. In some embodiments, less than 5 wt.% of the second breadcrumb has a particle size of more than 4 mm as determined by sieve analysis. In some embodiments, less than 20 wt.% of the second breadcrumb has a particle size of more than 2.8 mm as determined by sieve analysis.

In some embodiments, the first breadcrumb has a breadcrumb particle size distribution of
> than 4.mm - 8-15 wt.%
2.8 to 4 - 33-43 wt.%
1.7 to 2.8 - 28-48 wt.%
1 to 1.7 - 0-4 wt.%
0.71 to 1 - 0-3 wt.%
0.25 to 0.71 - 0-4 wt.%
0 to 0.25 - 0-3 wt.% as determined by sieve analysis

In some embodiments, the second breadcrumb has a breadcrumb particle size distribution of
> than 4.mm - 0-3 wt.%
2.8 to 4 - 6-15 wt.%
1.7 to 2.8 - 31-41 wt.%
1 to 1.7 - 22-32 wt.%
0.71 to 1 - 9-16 wt.%
0.25 to 0.71 - 10-18 wt.%
0 to 0.25 - 0-3 wt.% as determined by sieve analysis

In some embodiments, the breadcrumbs comprise between 5-25 wt.% of the first breadcrumbs and 75-95 wt.% of the second breadcrumbs.

In some embodiments, the breadcrumbs (i.e., total breadcrumbs in the breadcrumb layer, which may comprise the mixture of first and second breadcrumbs) have a particle size distribution wherein at least 10 wt.% of breadcrumbs have a particle size greater than 2.8 mm and/or wherein at least 40 wt.% of breadcrumbs have a particle size greater than 1.7 mm, and/or wherein at least 60 wt.% of breadcrumbs have a particle size greater than 1 mm, all as determined by sieve analysis.

In some embodiments, the breadcrumbs (i.e., total breadcrumbs in the breadcrumb layer, which may comprise the mixture of first and second breadcrumbs) have the following particle size distribution as determined by sieve analysis:
> than 4.mm - 0.25-7.5 wt.%
2.8 to 4 - 7-22 wt.%
1.7 to 2.8 - 25-45 wt.%
1 to 1.7 - 15-35 wt.%
0.71 to 1 - 5-20 wt.%
0.25 to 0.71 - 5-20 wt.%
0 to 0.25 - 0-5 wt.%

In some embodiments, the breadcrumbs (i.e., total breadcrumbs in the breadcrumb layer, which may comprise the mixture of first and second breadcrumbs) have the following particle size distribution as determined by sieve analysis:
> than 4.mm - 0.5-5 wt.%
2.8 to 4 - 9-20 wt.%
1.7 to 2.8 - 30-40 wt.%
1 to 1.7 - 18-30 wt.%
0.71 to 1 - 7-15 wt.%
0.25 to 0.71 - 8-17 wt.%
0 to 0.25 - 0-3 wt.%

The breadcrumbs preferably completely surround the batter layer, i.e., to form one or more breadcrumb layer. In some embodiments, the breadcrumbs have a coating coverage of at least 80% of the batter layer, or at least 90% of the batter layer, or at least 95% of the batter layer, or preferably 100% of the batter layer. In some embodiments, the breadcrumbs comprise more than one or more layer of breadcrumbs.

In some embodiments, the breadcrumbs (i.e., breadcrumb layer(s)) are present in an amount that is 15. wt.% to 22 wt.% of the fish finger product, or from 16 wt.% to 20 wt.% of the fish finger product. In some embodiments, the breadcrumbs are present in an amount that is at least 15 wt.% of the fish finger product, or at least 16 wt.% (e.g., 16 wt.% to 22 wt.%), or at least 17 wt.% (e.g., 17 wt.% to 22 wt.%), or at least 18 wt.% (e.g., 17 wt.% to 22 wt.%) of the fish finger product. In some embodiments, the breadcrumbs are present in an amount that is less than 22 wt.% of the fish finger product, or less than 21 wt.% (e.g., 15 wt.% to 21 wt.%), or less than 20 wt.% (e.g., 15 wt.% to 20 wt.%), or less than 19 wt.% (e.g., 15 wt.% to 19 wt.%) of the fish finger product.

### E) Spray coating the breadcrumbs with an oil at a temperature between 50 to 90 °C, wherein the oil has a melting point of less than 0 °C.

In step e) of the present invention, the method comprises spray coating the breadcrumbs with an oil that has a melting point of less than 0 °C. In some embodiments, the oil has a melting point that is less than -5°C, or less than -10 °C, or less than -15 °C, or less than or equal to - 20 °C. In some embodiments, the oil has a melting point that is between -40 °C and 0°C, or between -30°C and 0 °C, or between -25 °C and 0 °C. The melting point may be as determined by ASTM D5440-17. In some examples, the spray-coating may be performed using a spray-coating device manufactured by Costruzioni Meccaniche Industriali S.a.s. - Zampieri S.r.l., Ala (TN), Italy. The oil is preferably nebulised prior to coating on the breadcrumbs. Oils with melting points less than 0 °C are compatible with the spray coating methods and spray coating temperatures disclosed below. They are also easier to handle as compared with solid fats and are healthier.

In the present method, the oil is spray-coated at a temperature between 50 °C to 90 °C, more preferably between 60 °C and 90°C, and more preferably between 65 °C and 80 °C, or between 70 °C and 80 °C. In some embodiments, the oil is spray-coated at a temperature of greater than 60 °C, or greater than 65°C, or greater than or equal to or greater than 70°C. In some embodiments, the oil is spray-coated at a temperature of less than 80 °C, or less than 75 °C. It was found that heating the oil to a temperature of between 50 and 90 °C, and more preferably between 65 °C and 80 °C, guaranteed an optimum level of spray-coated oil. Lowering the temperature below 50 °C and/or increasing the temperature above 90°C meant that the fluidity and viscosity of the oil was affected which altered the level of oil uptake on the surface of the fish finger product.

In some embodiments, the breadcrumbs are spray-coated by oil as they are conveyed on , on a moving belt, in some embodiments, at a loading rate of 2000kg/h-4400 kg/h.

In some embodiments, the oil is pressurised to a pressure of at least 0.3 bar, or at least 0.5 bar. In some embodiments, the oil is pressurised to a pressure of between 0.3 bar to 1.75 bar, more preferably from 0.5 to 1.5 bar. In preferred embodiments, the oil is pressurised using a pump comprising an invertor. This ensures consistency of pressure applied.

In some embodiments, the oil is spray coated using at least one nozzle, and multiple nozzles wherein the multiple nozzles are configured to simultaneously spray-coat oil on both the top and bottom surface of the food product. In some embodiments, the multiple nozzles comprising two or more nozzles, or four or more nozzles. In some embodiments, the nozzles are connected to spinner discs that rotate and distribute oil droplets onto the food product. The nozzle, and preferably nozzles with spinner discs, can improve the homogenous distribution of the oil.

In some embodiments, the oil is spray-coated at a flow rate of greater than 0.4 ml/s, or greater than 0.5 ml/s, or greater than 0.6 ml/s, or greater than 0.7 ml/s, or greater than or equal to 0.8 ml/s, and in some examples, greater than or equal to 5 ml/s, or greater than or equal to 10 ml/s, or greater than or equal to 50 ml/s. Lower flow-rates of oil were found to lead to less homogenous dispersion of oil droplets.

In some embodiments, the breadcrumbs are coated with between 2.5g and 7g of oil per 100g of food product, or between 2.5g and 6g of oil per 100g of fish finger product, more preferably between 4 g and 5.5 g of oil per 100g of fish finger product. In some embodiments, the breadcrumbs are coated with less than 7g of oil per 100 g of fish finger product (e.g., between 2.5g and 7g, or between 3.5g and 7g) preferably less than 6g of oil per 100 g of fish finger product (e.g., between 2.5g and 6g, or between 3.5g and 6g), and preferably less than 5g of oil per 100 g of fish finger product (e.g., between 2.5g and 5g, or between 3.5g and 5g).

In some embodiments, the oil is a plant-based oil. In preferred embodiments, the oil comprises at least 50% unsaturated oil or fat, preferably at least 60%, or at least 70%, or at least 80% unsaturated oil or fat. In preferred embodiments, the oil comprises less than 30% saturated oil or fat, or less than 20% saturated oil or fat. In some embodiments, the oil comprises at least 50% of oleic acid, linoleic acid, α- linoleic acid or a combination thereof, preferably at least 60%, or at least 70%, or at least 80% of oleic acid, linoleic acid, α-linoleic acid or a combination thereof.

In some embodiments, the oil may be selected from sunflower oil, rapeseed oil, olive oil or vegetable oil. These oils are preferred because they are healthier and low in saturated fats.

In preferred embodiments, the oil is rapeseed oil or sunflower oil. In some embodiments, the oil is sunflower oil obtained from deflaxed sunflower seed. Sunflower oils and rapeseed oils may be selected since they are low in saturated fats.

Spray-coating the breadcrumbs with the oil can result in a food product with a spray-coated oil layer disposed on the breadcrumbs. This may otherwise be described or referred to as the oil uptake layer or oil surface layer. The oil uptake (e.g., amount of oil that is coated on the surface of resultant food product formed by the method of the present invention), is found to be less than in comparative methods involving (i) a frying or pre-frying step prior to freezing and/or (ii) dipping the product in cold oil prior to freezing. It is also understood that the degree of penetration of the spray-coated oil into the product core is very low using a spray-coating method.

In some embodiments, the spray-coated oil layer is present in an amount of less than 7 wt.% of the fish finger product, or less than 6.5 wt.% of the fish finger product., or less than 6 wt.% of the fish finger product. In some embodiments, the spray-coated oil layer is present in an amount of less than 5.5 wt.% of the fish finger product, or less than 5 wt.%, of the fish finger food product. In some embodiments, the spray-coated oil layer is present in an amount of 1 wt.% to 6 wt.% of the fish finger product, or from 2 wt.% to 5.5 wt.%, or from 2.5 wt.% to 5.5 wt.%, or from 2.75 wt.% to 5.5 wt.%, or from 3 wt.% to 5.5 wt.% of the fish finger product.

In some embodiments, the spray-coated oil layer has a peroxide value of less than 10 mEq O₂/kg, or less than 7 mEq of O₂/kg, or less than 6 mEq of O₂/kg, or less than 5 mEq of O₂/kg, or less than 4 mEq of O₂/kg. In some embodiments, the peroxide value may be determined immediately after spray-coating, or within 10 minutes after spray-coating, or within 1 hour of spray-coating. The peroxide value is found to be lower than for products formed by comparative methods wherein the oil layer on the surface of the product has been pre-fried or heat-treated (i.e., which typically have mEq of O₂/kg values in excess of 10, for example, ~ 12). This can be advantageous for improving shelf-life, decreasing rancidity and increasing freshness of the product. This also avoids any rancidity flavour. The peroxide value may be determined by iodometric endpoint determination using sox-let extraction, for example, using the method reported in the analysis report is Reg CEE 2568/1991 Annex III Reg UE 1784/2016.

In some embodiments, step e), (i.e., spray-coating the breadcrumbs with oil) may result in a fish finger product that contains at least 5% less oil, by weight of the total product, as compared to a method where the product is fried or pre-fried in oil, or at least 6% less oil, or at least 7% less oil, or at least 8% less oil, or at least 9% less oil, or at least 10% less oil, by weight of the total fish finger product. The resulting product is therefore less greasy and/or healthier as compared with a pre-fried or deep-fried fish finger product.

In some embodiments, the total oil of the fish finger product is less than 7.3 wt.%, preferably less than 7 wt.%, and more preferably less than 6.5 wt.%, or more preferably less than 6 wt.%, or more preferably less than 5.5 wt.%, or more preferably less than 5.wt.%. Total oil includes the spray-coating oil layer and any other oil present in another layer (e.g., the batter layer or breadcrumb layer). The overall total oil in fish finger product formed by the method of the invention is typically less than a product formed by traditional frying methods.

### Freezing

In preferred embodiments, the method further comprises step f), after step e), which comprises freezing the product. This results in a frozen fish finger product. The frozen fish finger product is suitable for long-term storage.

In such embodiments, the method does not comprise heating the fish finger product after step e) (i.e., spray coating the breadcrumbs with oil), and before step f) (i.e., freezing the fish finger product). In such embodiments, the method does not comprise heating the fish finger product after step e) (i.e., spray coating the breadcrumbs with oil), and before step f) (i.e., freezing the fish finger product) by oven-baking, frying, or microwave radiation.

In some embodiments, the freezing occurs via forced air freezing. In some embodiments, the freezing occurs at a temperature of less than -20°C, or less than -30 °C, or about -35 °C. In some embodiments, the freezing occurs at a temperature between -20 °C and -45 °C

In some embodiments, the method further comprises packaging the frozen fish finger product after freezing. Once frozen, and optionally packaged, the frozen fish finger may be stored for up to 15 months, or up to 1 year, at a temperature below -15 °C, more preferably at- 18°C.

In some embodiments, the method comprises a cooking step. The cooking step occurs after step f) (i.e., freezing the fish finger product) and, if present, the packaging step. The cooking may include one or more of oven-baking, pan-frying, air-frying or grilling. The cooking step is intended carried out by the consumer and not during production of the product.

### Fish Finger Food Product

### Product Characteristics

Described herein is a fish finger product comprising
a fish finger core
a batter layer disposed around the core,
a breadcrumbs disposed on the batter layer; and
an oil layer disposed on the breadcrumbs, wherein the oil layer is present in an amount of less than 7 wt.% of the fish finger product, more preferably less than 6 wt.% of the fish finger product. In some embodiments, the oil layer is present in an amount from 3.5 wt.% to 6 wt.% of the coated food product.

The features, and preferred features of the core, batter layer, breadcrumbs and oil layer are as described elsewhere herein. The features and preferred features of the core, batter layer, breadcrumbs and oil layer are intended to be combined and contain features that are extrapolated from the application Examples.

In some embodiments, the fish finger product may comprise
50 to 70 wt. fish finger core,
13 to 20 wt.% batter layer,
15 to 22 wt.% breadcrumbs
and up to 7 wt.% of oil layer (i.e., a spray-coated oil layer) disposed on the breadcrumbs, more preferably up to 6 wt.% of oil layer.

In some embodiments, the oil layer (i.e., spray-coated oil layer) is present in an amount of less than 7 wt.% of the fish finger product, or less than 6.5 wt.% of the fish finger product, or less than 6 wt.% of the fish finger product, or less than 5.5 wt.% of the coated food product. In some embodiments, the spray-coated oil layer is present in an amount of 1 wt.% to 6 wt.% of the food product, or from 2 wt.% to 6 wt.%, or from 2.5 wt.% to 6 wt.%, or from 2.75 wt.% to 6 wt.%, or from 3.5 wt.% to 6 wt.% of the fish finger product.

In some embodiments, the oil layer has a peroxide value of less than 10 mEq of O₂/kg, or less than 9 mEq of O₂/kg, or less than 8 mEq of O₂/kg, or less than 7 mEq of O₂/kg, mEq of O₂/kg or less than 6 mEq of O₂/kg, as determined by iodometric endpoint determination. The peroxide value may be determined by iodometric endpoint determination using sox-let extraction, for example, using the method reported in the analysis report Reg CEE 2568/1991 Annex III Reg UE 1784/2016. The peroxide value is found to be lower than for products formed by comparative methods wherein the oil layer on the surface of the product has been cooked, heat-treated, or fried. This can be advantageous for shelf-life, decreased rancidity and freshness of the product. This also reduces or minimises any rancidity flavour.

In some embodiments, the fish finger product is a frozen fish finger product. The frozen fish finger product is suitable for cooking or oven-baking or air-frying (e.g., by the consumer at home). In some embodiments, the food is a manufactured fish finger food product (e.g., a mass-produced food product formed using a production line). In some embodiments, the fish finger product is suitable for preparation with industrial coating lines.

The fish finger of the present invention has a rectangular or substantially rectangular shape. In some embodiments, the fish finger product has a length of between 70 and 110 mm, or 80 and 100 mm, for example about 90 mm. In some embodiments, the fish finger core has a length of at least 70 mm (e.g., from 70 to 110 mm), or at least 75 mm (e.g., from 75 to 110 mm), or at least 80 mm (e.g., from 80 to 110 mm), or at least 85 mm (e.g., from 85 to 110 mm). In some embodiments, the fish finger product has a length of less than 110 mm, or less than 105 mm (e.g., from 70 to 105 mm), or less than 100 mm (e.g., from 70 to 100 mm), or less than 95 mm (e.g., from 70 to 95 mm), or less than 80 mm (e.g., from 70 to 80 mm). In some embodiments, the fish finger core has a width of between 15 and 35 mm, or 20 and 30 mm, for example between 24 and 28 mm. In some embodiments, the fish finger product has a width of at least 15 mm (e.g., from 15 to 35 mm), or at least 16 mm (e.g., from 16 to 35 mm), or at least 17 mm (e.g., from 17 to 35 mm), or at least 18 mm (e.g., from 18 to 35 mm), or at least 19 mm (e.g., from 19 to 35 mm), or at least 20 mm (e.g., from 20 to 35 mm), or at least 21 mm (e.g., from 21 to 35 mm), or at least 22 mm (e.g., from 22 to 35 mm), or at least 23 mm (e.g., from 23 to 35 mm), or at least 24 mm (e.g., from 24 to 35 mm), or at least 25 mm (e.g., from 25 to 35 mm). In some embodiments, fish finger product has a width of less than 35 mm, or less than 34 mm (e.g., from 15 to 34 mm), or less than 33 mm (e.g., from 15 to 33 mm), or less than 32 mm (e.g., from 15 to 32 mm), or less than 31 mm (e.g., from 15 to 31 mm), or less than 30 mm (e.g., from 15 to 30 mm), or less than 29 mm (e.g., from 15 to 29 mm), or less than 28 mm (e.g., from 15 to 28 mm), or less than 27 mm (e.g., from 15 to 27 mm) . In some embodiments, the fish finger product has a height of between 10 and 20 mm, or between 12 and 18 mm, for example between 14 and 16 mm. In some embodiments, the fish finger product has a height of at least 10 mm, or at least 11 mm (e.g., from 11 to 20 mm), or at least 12 mm (e.g., from 12 to 20 mm), or at least 13 mm (e.g., from 13 to 20 mm), or at least 14 mm (e.g., from 14 to 20 mm). In some embodiments, the fish finger product has a height of less than 20 mm, or less than 19 mm (e.g., from 10 to 19 mm), or less than 18 mm (e.g., from 10 to 18 mm), or less than 17 mm (e.g., from 10 to 17 mm), or less than 16 mm (e.g., from 10 to 16 mm). In some embodiments, the dimensions of the length to width of the fish finger product are from 2:1 to 5:1, or from 2.5:1 to 4.5:1, or from 3:1 to 4:1.

In some embodiments, the fish finger product has a weight of between 15 g and 35 g, more preferably between 20 g and 30 g, even more preferably between 22.5 g and 27.5 g and even more preferably about 25g.

### Examples

### Example 1 - Exemplary method of the invention

The present example relates to a method of battering and breading a fish finger product.

The core was a frozen whitefish hake core with an approximate length of 79.5 mm, a width of 20.5 mm, a height of 9.8 mm and a weight of around 15 g.

The batter is prepared in a dedicated tank, where components of the batter are mixed together at room temperature. Constituents of the batter mixture can be obtained from commercial sources. In this example, 40°brix frozen lemon juice concentrate supplied by Agrumaria Coreleone was used. The batter layer is then disposed around the core. This can be done by hand, i.e., by dipping the core in batter mixture, or wherein the fish finger core is conveyed on a belt and where the liquid batter mixture is poured across the core. This step can be performed using a battering machine, for example, GEA Opti-Coater.

**Table 1: Example batter mixture composition**

| **Raw Material** | **wt.% Batter** | **wt.% Product** |
|---|---|---|
| Water | 50 | 8.38 |
| Wheat flour, type 0 | 29.85 | 5 |
| Potato Starch | 5.5 | 0.92 |
| Lemon juice concentrate | 2.00 | 0.34 |
| Rapeseed oil | 10 | 1.68 |
| Salt, evaporated | 2.65 | 0.44 |
| Total | 100.00 | 16.77 |

The pH of the batter mixture is between 3.0-3.5.

After application of the batter layer, the battered fish finger cores are breaded using breadcrumbs. This step can be performed using a breading machine, for example, manufactured by GEA CrumbMaster or by manually dipping the battered core in breadcrumbs.

Two different crumbs are used to make up the breadcrumb layer, one with a larger size distribution than the other having the following size distributions.

### Small and Large crumb particle size distribution

| | Smaller crumb particle size distribution | | Larger crumb particle size distribution | |
|---|---|---|---|---|
| Sieve Range (mm) | min. wt. % | max wt.% | min. wt. % | max wt.% |
| > 4 (e.g., 4 - 5.6) | | 3 | 8 | 15 |
| 2.8-4 | 6 | 15 | 33 | 43 |
| 1.7 - 2.8 | 31 | 41 | 38 | 48 |
| 1 - 1.7 | 22 | 32 | | 4 |
| 0.71 - 1 | 9 | 16 | | 3 |
| 0.25 - 0.71 | 10 | 18 | | 4 |
| 0 - 0.25 | | 3 | | 3 |

These two different crumb sizes are blended together in in the breading machine at a ratio of 88:12 smaller crumb distribution: larger distribution before being applied to the battered core.

The surface of the resulting battered and breaded fish finger was then spray coated using ~ 1.25 g of rapeseed oil per 25g fish finger. Rapeseed oil is a plant-based oil containing high levels of unsaturated fats and has a melting point less than 0 degrees. The rapeseed oil can be stored in a silo near a spray-oil machine. The oil can be heated to 70 degrees. The hot oil can be pumped and conveyed to nozzles which are placed both above and below a sliding belt containing the breaded and battered fish finger. The oil is nebulised through two rotating discs placed using the dosing nozzles. In one example method, the oil can be pumped at a pressure of 0.5 to 1 bar at a flow rate of 0.5-0.83 ml/sec. In another example, a pilot machine spray-coater comprising a small conveyor belt with an oil sprayer was used for spray-coating. A pressure of 1.5 bar was applied with flow-rates of 125 ml/s and 80 ml/s for the upper and lower nozzles respectively, while heating the oil to 70 °C.

The present inventors uniquely found that heating the oil to a specific temperature, notably between 50 and 90 degrees, guaranteed an appropriate level of uptake of the spray-coated oil. Lowering the temperature below 50 °C and/or increasing the temperature above 90°C meant that the fluidity and viscosity of the oil changed which altered the level of oil uptake on the surface of the product. More specifically, a temperature too low means that the oil is formed of bigger drops which are harder to spray, which a temperature too hot means that the oil is too thin and does not effectively coat the battered and breaded product. A temperature range between 60 and 90 degrees provided the most optimum results, with 70 degrees being the most preferred. Similar effects were observed with both rapeseed oil and sunflower oil.

The battered and breaded fish fingers can then be frozen, for example, by forced air. Example conditions are as follows:
Temperature -25 / - 28 °C
Freezing time 50 minutes-60 minutes
Fluid: ammonium
Gyro Freezer

The frozen products are packaged and stored. The products are suitable for sale to the consumer. The frozen battered and breaded fish fingers are then designed to be subsequently cooked (e.g., oven-baked, grilled, pan-fried in oil or air-fried) by the consumer at home. The oven-baking step may comprise oven-baking the food product at a temperature between about 200 °C and 240 °C for about 8 to 18 minutes, for example, 220 °C for 15 minutes.

### Example Product

An example product of the invention is as follows:

| | g | wt. % total product |
|---|---|---|
| Hake Core | 15 | 59.87 |
| Batter Layer | 4.2 | 16.76 |
| Breadcrumb Layer | 4.6 | 18.36 |
| Rapeseed Oil Layer | 1.25 | 5.01 |
| Water Condensate | 0 | 0 |

Notably, a fish finger produced by the method of the present invention resulted product had a -10% reduction in total oil content vs the fried product, while being visually similar in appearance (see Figure 1 - Left (pre-fried fish finger) and Right (spray-coated fish finger).

Despite being prepared by a completely different method, the fish finger products of the invention were manufactured were sent for consumer analysis against the current fried Fish Finger. From the testing and subsequent cluster analysis from a sample size of 100 consumers, 62 could be considered "Fish Finger Lovers" and gave the new prototypes an overall liking score that was the same as the current from a statistical significance point of view. In addition, acoustics results showed that example products of the invention had comparable acoustic properties to the current pre-fried products on the market (see Figure 3).

### Optimisation and Trial Data

At the start of research and development, there remained a need to develop a new and improved methods for producing battered and breaded food products which were either (i) fresher, healthier and/or and less greasy as compared to products on the market which were pre-fried, and/or (ii) simpler to produce and less energy intensive compared with methods of making fish finger products currently on the market which are pre-fried.

Several methods for preparation of a food product were tested. The same battered and breaded core product was used for comparison.

Prior methods for preparation of battered and breading food products, involve battering the core, breading the batter layer and pre-frying the food product in oil.

### Comparative Method (A)

A first method of preparation, without a pre-frying step, involved dipping a battered and breaded food product in cold sunflower oil for 15 seconds, followed by freezing at -35°C. The frozen food product was then oven-baked for consumption. The food product prepared by comparative method A were found to be very greasy with a lot of excess oil.

### Comparative Method (B)

A second comparative method (B) of preparation involved spray coating each battered and breaded core with 2 - 2.5 grams of sunflower oil, followed by oven-baking at 220°C for 2 minutes 30 seconds. The food product was then frozen at -35°C, and the frozen product was oven-baked for consumption. Using this method, water condensate was lost from the product weight. The texture of the coating was compromised.

### Spray-coating method (C)

The third tested method (C) of preparation involved spray coating a battered and breaded core with oil, followed by freezing at -35°C. The frozen products could then be oven-baked for consumption using standard methods.

The battered and breaded food product prepared by method C were found to be less greasy and fresher compared with fried products. Unlike the standard methods of battering and breading products no water condensate was measured. Further, the battered and breaded food product prepared by method C also performed well in terms of texture and taste performance after cooking. Battered and breaded products formed by this method had good crunchiness.

Overall, a method comprising spray-coating a battered and breaded food product with oil, followed by freezing showed the best results in terms of sensory characteristics.

### pH adjustment of the batter mixture

Since the preferred method of production without pre-frying step did not involve any heat treatment of the product before freezing, the food hygiene and safety of the resultant product had to be checked and or adjusted, to see if the method of the invention required modification. Bacterial growth was measured using the Hazard Analysis and Critical Control Point risk assessment following the CE Regulation 2073/2005.

A first batter mixture comprising only water, wheat starch and wheat flour was found to have unacceptable microbiological growth. The present inventors nevertheless found that microbiological growth could be prevented by adjusting the pH of the batter mixture/batter layer.

Preliminarily, a similar batter was tested but with the addition of lemon juice concentrate (pH 2.5). Addition of lemon juice to give a pH of the resultant liquid batter mixture which was about 4.5 meant that the microbiological growth was substantially lowered compared to the batter mixture in the absence of lemon juice (~ pH 6.5). This was of particular importance considering that the batter coating does not receive any heat treatment prior to freezing in the method of the present invention. A pH of 4.5 was determined be the upper limit for acceptable microbiological safety.

The inventors next tested a similar batter mixture but with the addition of further lemon juice concentrate. Here, a resulting pH of the liquid batter mix of 3.1 was measured. The measured pH was still found to be stable after two hours. Importantly, a batter mixture at this pH was found to be very successful at preventing microbiological growth. Nevertheless, addition of further lemon juice concentrate to reduce the pH of the batter mixture, particularly to a pH of below 2.5, was found to compromise the stability (i.e., causing denaturation of certain proteins) and the viscosity of the batter mixture.

Notably, the addition of the lemon juice concentrate was not found to affect the sensory characteristics, texture, mix stability, viscosity and adhesion of the liquid batter when added to achieve an overall pH of the liquid batter of between 2.5 and 4.5.

### Defining the Optimal Temperature Range and Effect of the Spray-Coating Temperature on Level of Oil Uptake

During kitchen trials, rapeseed oil was initially sprayed at ambient temperature (~ 22 °C) to a representative coated food product comprising a batter and breadcrumb layer. Unfortunately, at such temperatures, the oil was not distributed uniformly when sprayed at these temperatures with a poor distribution of the oil along the surface.

The oil was next sprayed at a temperature of 45 °C, which was achieved by incubating the oil in warm water before spraying. A good distribution of the amount of oil over the entire sample was still not achieved at this temperature. Further, the time necessary for the breading to absorb the oil took a long time due to the size of the oil drops produced when sprayed at this temperature.

The oil was next sprayed at a temperature of around 75 °C. This was achieved by incubating the oil in hot water before spraying. The resulting spray-coated food product was significantly improved compared to those formed from spray-coating at lower temperatures. Indeed, the oil mist was easily sprayed on the sample with a much more homogenous distribution. The oil drop size was also smaller meaning that the level of oil uptake was much improved, and was absorbed much more quickly by the coating.

The optimal spray-coating temperature also had a bearing on the appearance and greasiness of the spray-coated food products. These factors are related to how fast the breadcrumbs can absorb the oil before freezing and how fast the oil is distributed on the sample. For the products sprayed at ambient temperatures, there is poor oil uptake and pools of oil are seen on the surface of the sample even after resting for 30 seconds. In contrast, products sprayed at 75 °C demonstrated good levels of oil uptake. The appearance of products sprayed with different spray-coating oil temperature after freezing was also compared, with products spray coated with oil at 75 degrees having a much improved appearance compared to those spray-coated at around 40 degrees, followed by freezing.

This testing demonstrated that spraying oil at high temperatures e.g., between 50 °C and 90 °C, most optimally between 65 °C and 80 °C, or between 70 °C and 80 °C provides the best results for the product while keeping the energy usage of heating the oil still at a lower level as compared with the energy usage required by deep-frying. Such results can be replicated by a spray-coating machine, and with different oils (e.g., sunflower oil).

## Claims

1. A method of making a fish finger, comprising
a) providing a fish finger core
b) providing a batter mixture comprising an acidulant, said batter mixture having a pH in the range of from about 2.5 to about 4.5,
c) disposing the batter mixture around the core to form a batter layer,
d) coating the batter layer with breadcrumbs, and
e) spray coating the breadcrumbs with an oil at a temperature of between 50 and 90 °C, wherein the oil has a melting point of less than 0 °C.

2. The method of any preceding claim, further comprising step f), which comprises freezing the product

3. The method of any preceding claim, wherein the batter mixture has a pH in the range from 3 to 4.25, more preferably between 3 and 3.5.

4. The method of any preceding claim, wherein the acidulant comprises lemon juice concentrate.

5. The method of claim 4, wherein the batter mixture comprises 0.5-6 wt. % lemon juice concentrate, more preferably between 1-3 wt.% lemon juice concentrate.

6. The method of any preceding claim, wherein the breadcrumbs are in the form of a layer that comprises a mixture of two different breadcrumbs having a different size distribution, wherein the first breadcrumb has a larger size distribution than the second breadcrumb.

7. The method of claim 7, wherein at least 40% of the first breadcrumb has a particle size of at least 2.8 mm as determined by sieve analysis and/or wherein at least 20% of the second breadcrumb has a particle size of less than 2.8 mm as determined by sieve analysis.

8. The method of any of claims 6-7, wherein the breadcrumb layer comprises 5-25 wt.% of the first breadcrumb and 75-95 wt.% of the second breadcrumb.

9. The method according to any preceding claim, wherein in step e), the oil is spray-coated at a temperature between 60 °C to 90 °C, and more preferably at a temperature between 65 °C to 80 °C, and even more preferably between 70 °C and 80 °C.

10. The method according to any preceding claim, wherein the oil is rapeseed oil or sunflower oil.

11. The method according to any preceding claim, wherein the fish finger has a length between 70 and 110 cm and a width between 15 and 35 cm, preferably wherein the fish finger has a length between 80 and 100 cm and a width between 20 and 30 cm.

12. The method according to any preceding claim, wherein the fish finger core comprises
(i) whitefish, optionally wherein the whitefish is selected from hake, haddock, cod, pollock, or pangasius and/or
(ii) a plant-based material

13. A fish finger producible by the method of any one of claims 1-12, comprising
a fish finger core; and
a batter layer disposed around the fish finger core, said batter layer comprising an acidulant; and
breadcrumbs disposed on the batter layer; and
an oil layer disposed on the breadcrumbs, wherein the oil layer is present in an amount of less than 7 wt.% of the fish finger, and preferably less than 6 wt.% of the fish finger.

14. A fish finger according to claim 13, wherein the fish finger comprises
50 to 70 wt. fish finger core,
13 to 20 wt.% external batter layer, and
15 to 22 wt.% breadcrumbs.

15. A fish finger according to any one of claims 13-14, wherein the oil layer has a peroxide value of less than 10 mEq of O₂/kg, and preferably less than 7 mEq of O₂/kg as determined by iodometric endpoint determination.
